# DEMANDE DE BREVET EUROPEEN

(11) **EP 1 229 588 A1**
(43) Date de publication de la demande: **07.08.2002**
(21) Numéro de dépôt: 02290223.3
(22) Date de dépôt: 31.01.2002
(51) Int. Cl.: H01L 29/15, G02F 1/35, G02F 1/017

(54) **Absorbant optique saturable et application à la régénération d'un signal mutliplexe en longueur d'onde**

(30) Priorité: 02.02.2001 FR 0101452
(71) Demandeur: ALCATEL, 75008 Paris (FR)
(72) Inventeur: Shen, Alexandre, 75018 Paris (FR)
(74) Mandataire: Fournier, Michel

(57) **Abrégé**

L'invention concerne un composant absorbant optique saturable. Selon l'invention, le composant est constitué d'un matériau à absorption inhomogène (10) comprenant une pluralité d'ensembles de boîtes quantiques formées dans des couches (n₁, nₚ) empilées (A), les boîtes quantiques de chaque ensemble étant dimensionnées de manière à présenter une valeur de longueur d'onde d'absorption associée audit ensemble.

## Description

L'invention concerne un absorbant optique saturable et son application à la régénération d'un signal multiplexé en longueur d'onde.

Un absorbant optique saturable est un dispositif optique constitué d'un matériau apte à absorber un signal optique de faible puissance lumineuse, mais transparent à puissance élevée. Le matériau d'un absorbant saturable est d'autant plus transparent pour un faisceau lumineux que la puissance de ce faisceau est élevée.

Un exemple d'utilisation d'un absorbant saturable est l'atténuation du bruit parasite présent entre les impulsions d'un signal optique modulé en puissance.

Lorsqu'une impulsion de puissance optique est reçue par un absorbant saturable, ce dernier devient transparent et laisse passer l'impulsion. En revanche, pour le bruit parasite présent entre les impulsions, l'absorbant saturable devient absorbant et atténue ce bruit.

Dans le cas de signaux optiques multiplexés en longueur d'onde, le signal de chaque canal est modulé en puissance. On peut donc aussi avoir recours aux absorbants saturables pour la régénération de signaux multiplexés en longueur d'onde.

Cependant, le matériau constituant les absorbants saturables utilisés à ce jour pour la régénération de signaux multiplexés en longueur d'onde imposent l'utilisation d'un démultiplexeur pour séparer spatialement les composantes optiques de longueurs d'onde différentes formant le signal multiplexé. Après le passage de ces composantes dans un milieu absorbant saturable, on obtient au moyen d'un multiplexeur le signal multiplexé en longueur d'onde régénéré.

Un dispositif de démultiplexage en longueur d'onde est nécessaire car il faut séparer les différents canaux du signal pour les diriger vers l'élément absorbant non pas en un seul point, ce qui serait le cas en l'absence de démultiplexage, mais en plusieurs points bien séparés, chaque point correspondant à un canal de longueur d'onde donnée.

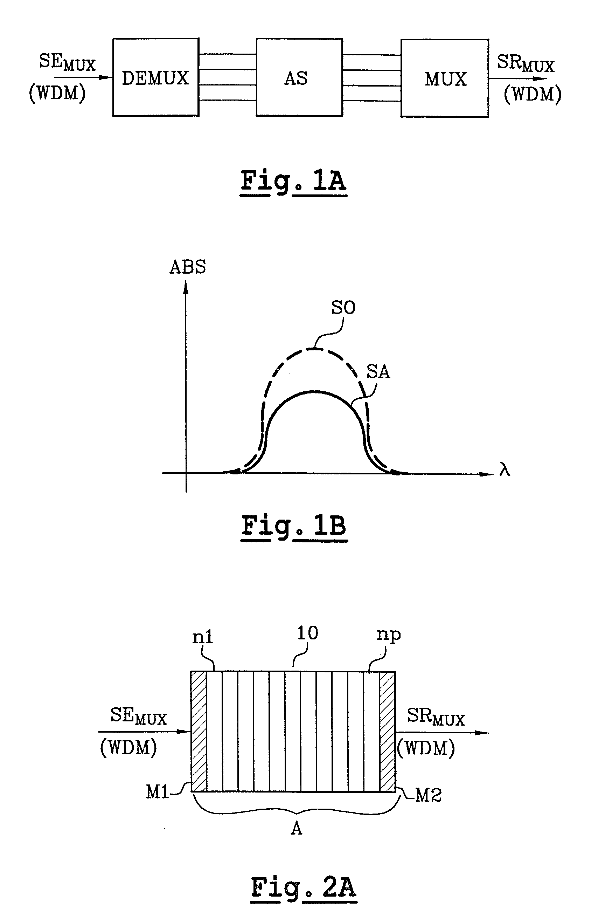

En effet, le signal d'un canal de longueur d'onde λ1 est constitué d'impulsions temporelles (correspondant à une modulation de puissance du signal optique) représentant des niveaux logiques hauts « 1 » et bas « 0 ». Or, les éléments absorbants saturables existants sont constitués d'un matériau à puits quantiques uniformes présentant une absorption homogène pour toute une plage de longueurs d'ondes. La courbe d'absorption d'un tel élément est illustrée sur la figure 1B. La courbe en pointillée SO correspond au spectre d'absorption pour une onde de faible puissance lumineuse, et la courbe en trait plein SA correspond au spectre d'absorption d'une onde de puissance lumineuse élevée. Cette figure montre bien que l'ensemble du spectre situé dans la bande d'absorption est modifié.

Or les signaux correspondant à certains canaux peuvent à un instant donné présenter un niveau haut « 1 », alors que les signaux d'autres canaux présenteront un niveau bas « 0 ». Ainsi, en l'absence de démultiplexage, le bruit parasite présent sur des niveaux bas de puissance de certains canaux sera masqué vis-à-vis de l'élément absorbant saturable par les niveaux hauts d'autres canaux. L'élément absorbant saturable ne pourra donc pas réduire le bruit des niveaux faible puissance dès lors que des niveaux hauts sont présents par ailleurs.

L'élément absorbant saturable est par conséquent inefficace sur un signal multiplexé en longueur d'onde en l'absence d'élément de démultiplexage et de remultiplexage.

La présente invention propose une solution simple ne nécessitant pas l'ajout d'un multiplexeur et d'un démultiplexeur. Cette solution est peu onéreuse par rapport aux solutions de l'état de la technique et moins encombrante.

La présente invention a donc pour objet un absorbant optique saturable, principalement caractérisé en ce qu'il comporte un matériau à absorption inhomogène comprenant une pluralité d'ensembles de boîtes quantiques, lesdits ensembles étant associés respectivement à des valeurs de longueur d'onde d'absorption différentes, les boîtes quantiques d'un ensemble donné étant dimensionnées de manière à présenter la valeur de longueur d'onde d'absorption associée à cet ensemble, en ce que lesdites boîtes quantiques sont disposées selon une pluralité de couches superposées, et en ce que ledit absorbant est conçu pour permettre à une onde optique incidente de traverser lesdites couches superposées.

Grâce à cette disposition, il est possible de régénérer plusieurs canaux d'un signal multiplexé en longueur d'onde sans avoir à le démultiplexer. Par ailleurs, le fait que l'onde optique puisse être traitée par propagation au travers des couches de boîtes quantiques, c'est-à-dire sans milieu guidant, perpendiculairement aux plans des couches, présente l'avantage que le dispositif est insensible aux états de polarisation des canaux.

Selon un premier mode de réalisation, chacune desdites couches comporte des boîtes quantiques d'un même ensemble, des couches appartenant à des ensembles différents étant superposées et formant une structure d'absorption élémentaire. L'absorbant comporte alors un empilement de plusieurs structures d'absorption élémentaires.

Selon un deuxième mode de réalisation, l'absorbant comporte un empilement de plusieurs couches, chacune de ces couches comportant des boîtes quantiques de plusieurs ensembles.

Pour limiter la hauteur de cet empilement, par conséquent son encombrement, mais aussi le temps de fabrication du composant, l'absorbant comporte deux miroirs disposés de part et d'autre de l'empilement et parallèlement à cet empilement ou légèrement inclinés par rapport à l'empilement.

Dans le cas où les miroirs sont parallèles entre eux, le composant obtenu forme ainsi une cavité résonante à l'intérieur de laquelle le signal optique d'entrée subit plusieurs réflexions et plusieurs traversées des couches de boîtes quantiques.

Selon un exemple de réalisation, le matériau absorbant saturable est constitué d'une couche de mouillage en matériau binaire, tel que l'arséniure d'indium (InAs), puis d'une couche à boîtes quantiques, cette alternance de couches de mouillage et de couches contenant les boîtes quantiques se répétant, l'ensemble étant déposé sur un substrat, par exemple en arséniure de gallium (GaAs).

L'invention a également pour objet une application de l'absorbant saturable dont les caractéristiques viennent d'être énoncées, pour la régénération d'un signal multiplexé en longueur d'onde, les valeurs de longueur d'onde associées aux ensembles étant respectivement des valeurs de longueur d'onde de porteuses optiques du signal multiplexé.

D'autres particularités et avantages de l'invention apparaîtront à la lecture de la description faite ci après et en regard des dessins annexés sur lesquels :

La figure 1A représente le schéma d'un système de régénération de signaux muni d'un absorbant saturable selon l'état de la technique.

La figure 1B représente schématiquement des courbes d'absorption selon le niveau de puissance lumineuse du signal incident en fonction de la longueur d'onde, pour un matériau absorbant saturable selon l'art antérieur.

La figure 2A représente le schéma d'un absorbant saturable selon l'invention.

Les figures 2b et 2c représentent schématiquement des courbes d'absorption SO et SA selon le niveau de puissance lumineuse du signal incident en fonction de la longueur d'onde, pour un matériau absorbant saturable selon l'invention.

La figure 3 représente la structure d'un absorbant saturable selon un premier mode de réalisation.

La figure 4A représente la structure d'un absorbant saturable selon un deuxième mode de réalisation.

La figure 4B représente un détail de la structure d'une couche de matériau absorbant.

L'élément absorbant saturable 10, illustré sur la figure 2A a une structure qui lui permet de recevoir une onde incidente à traiter, c'est-à-dire un signal optique d'entrée SE_{MUX} multiplexé en longueur d'onde et de régénérer ce signal pour fournir un signal régénéré SR_{MUX} multiplexé en longueur d'onde.

Cet élément comporte un matériau absorbant saturable inhomogène de structure A constituée de structures d'absorption élémentaires (désignées ultérieurement par "a" ou "b") formant un empilement de couches, telles que n1, np, à plans parallèles. L'élément est prévu pour pouvoir recevoir l'onde incidente se propageant selon une direction sensiblement perpendiculaire aux plans des couches, ceci afin de permettre à l'onde de traverser les couches superposées.

Avantageusement, la structure A est placée entre deux miroirs semi-réfléchissants M1, M2. Ainsi, l'onde effectue plusieurs traversées des couches, ce qui renforce l'effet absorbant saturable sans avoir à augmenter le nombre de couches.

Chaque structure d'absorption élémentaire a ou b peut comprendre selon les modes de réalisation détaillés dans la suite, une seule ou plusieurs couches à boîtes quantiques, les boîtes quantiques de chaque structure étant dimensionnées de manière à présenter des valeurs de longueur d'onde d'absorption égales aux longueurs d'onde des ondes porteuses du signal multiplexé SE_{MUX}.

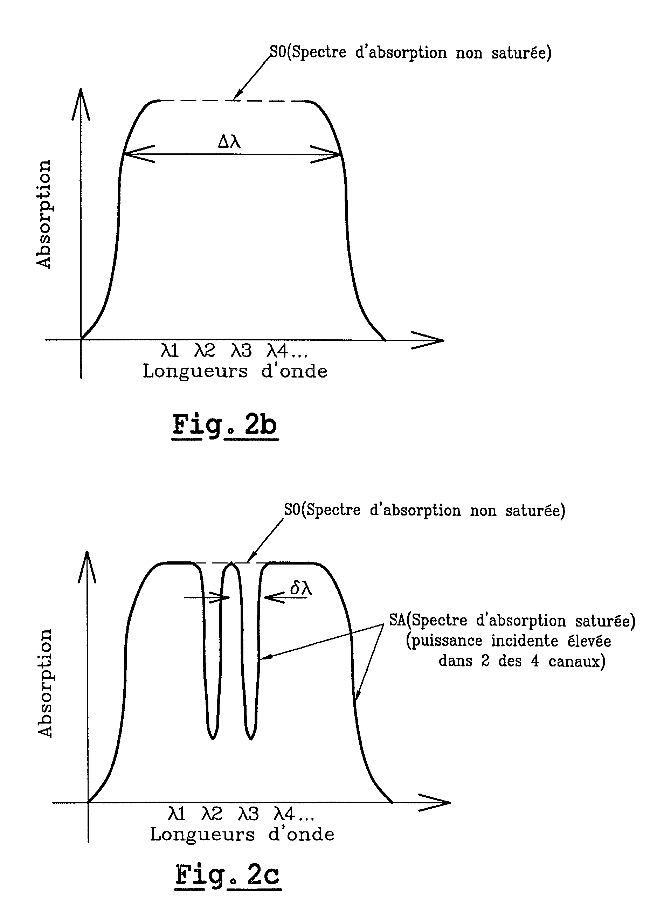

La figure 2b illustre le spectre d'absorption non saturée SO, de largeur Δλ prédéfinie, de l'élément absorbant selon l'invention. Cette courbe correspond au spectre initial en l'absence de puissance incidente ou lorsque le signal est bas sur chacun des canaux (par exemple quatre canaux λ1, λ2, λ3, λ4) du signal multiplexé.

La figure 2c illustre le spectre d'absorption saturée SA de l'élément absorbant selon l'invention. Ce spectre correspond à un exemple particulier pour lequel deux canaux, ici λ2, λ3, présentent un pic de puissance (la puissance incidente est élevée pour ces deux canaux), alors que les deux autres λ1, λ4 ont une puissance incidente nulle.

Dans le cas général, le nombre admissible de canaux dans la bande d'absorption de l'absorbant est donné par le rapport Δλ/δλ, δλ étant la largeur d'une raie d'absorption.

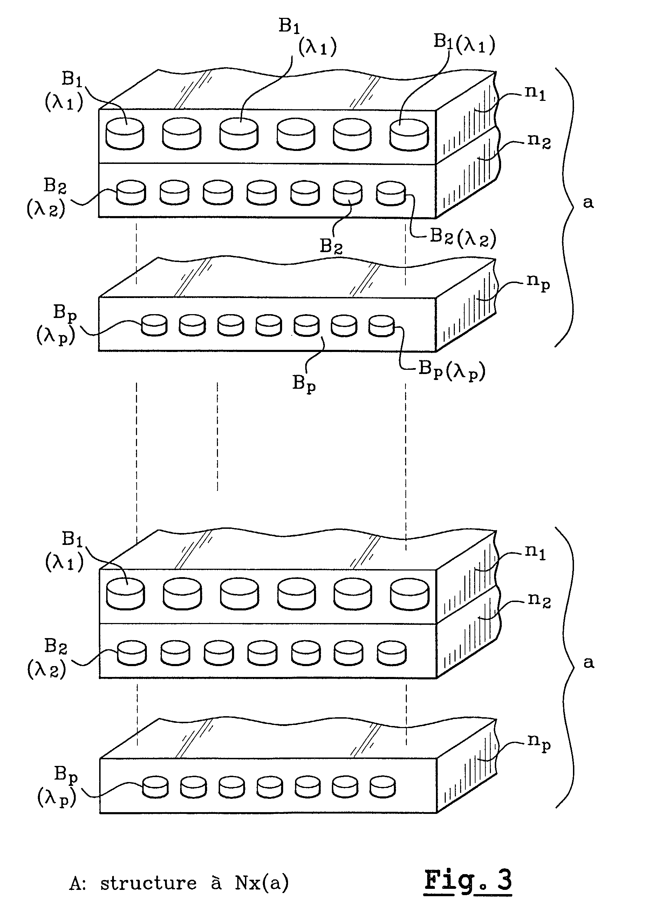

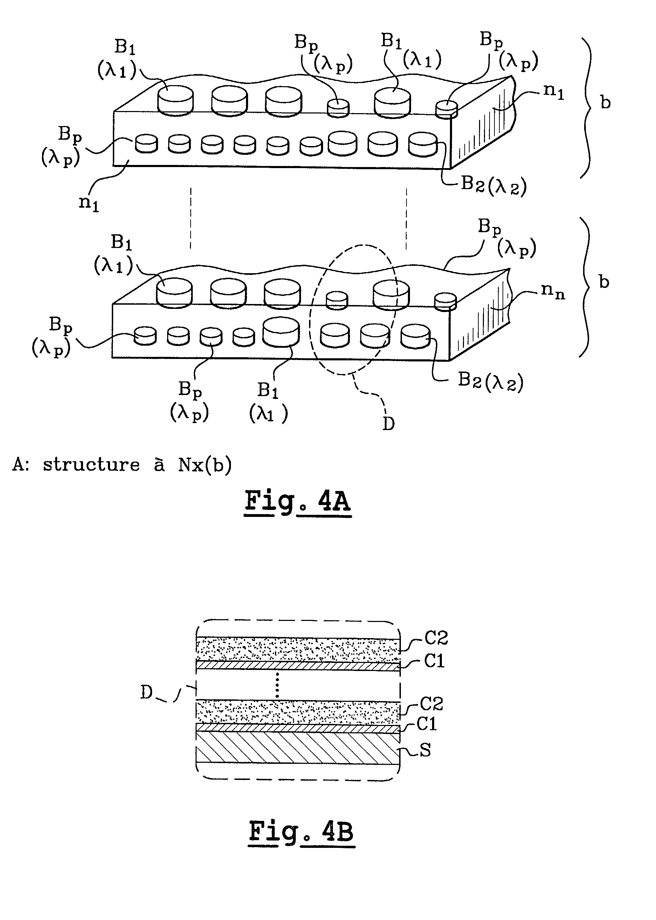

Deux exemples de réalisation pratiques sont donnés dans la suite et illustrés respectivement par les figures 3 et 4A. Ces exemples sont relatifs aux deux structures déjà évoquées.

Sur la figure 3 est illustré le cas où chaque structure élémentaire "a" est formée de plusieurs couches référencées respectivement n₁, n₂,...nₚ, comprenant respectivement des boîtes quantiques B1, B2,...Bp dimensionnées respectivement pour présenter différentes longueurs d'onde d'absorption λ1, λ2,...λp correspondant respectivement aux longueurs d'onde du signal multiplexé d'entrée.

Ainsi, la couche n₁ comprend des boîtes B1 dimensionnées pour présenter une longueur d'onde d'absorption λ1 correspondant au canal λ1 du signal multiplexé. La couche np comprend des boîtes Bp dimensionnées pour présenter une longueur d'ondes d'absorption λp correspondant au canal λp du signal multiplexé, etc.

Pour constituer l'empilement A, cette structure élémentaire a est répétée N fois, comme cela est illustrée sur cette figure 3.

Ainsi, chacun des ensembles de boîtes quantiques est formé de N couches de matériau absorbant de même constitution. La superposition de couches appartenant à des ensembles différents forment la structure d'absorption élémentaire a.

La figure 4A représente un deuxième mode de réalisation de l'invention. Dans ce mode, chaque couches n₁,...nₙ comporte des boîtes quantiques de plusieurs ensembles. Cette couche constitue une structure élémentaire "b". Cette structure est répété N fois de manière à former un empilement A de couches. La structure A comprend N couches, c'est-à-dire N structures élémentaires d'absorption b.

Ainsi par exemple la couche n₁ comprend des boîtes quantiques B1 dimensionnées pour présenter une valeur de longueur d'onde d'absorption associée à la longueur d'onde λ1 correspondant au canal λ1 du signal multiplexé; des boîtes d'absorption B2 dimensionnées pour présenter une valeur de longueur d'onde d'absorption associée à la longueur d'onde λ2 correspondant au canal λ2 du signal multiplexé; des boîtes d'absorption Bp dimensionnées pour présenter une valeur de longueur d'onde d'absorption associée à la longueur d'onde λp correspondant au canal λp du signal multiplexé.

Le choix du nombre de répétitions des structures élémentaires a ou b dépend de nombreux paramètres. En fait, quel que soit le type de structure élémentaire, un choix important est le nombre total de couches à boîtes quantiques constituant l'empilement A. Ce nombre doit être suffisamment élevé pour procurer un effet d'absorption saturable efficace, mais il faut prendre en compte le fait que la bande passante du composant se dégrade si le nombre de couches augmente.

Ainsi, il a été trouvé qu'en présence de miroirs M1 et M2 semi-réfléchissants possédant un taux de réflectivité de 70% environ, un nombre total de couches choisi sensiblement égal à 80 constitue un bon compromis qui assure une bande passante satisfaisante. Plus généralement, pour un taux de réflectivité sensiblement inférieur à 70%, il convient que le nombre total de couches soit sensiblement supérieur à 80, et réciproquement, pour un taux de réflectivité sensiblement supérieur à 70%, il convient que le nombre total de couches soit sensiblement inférieur à 80.

La structure de matériau absorbant correspondant aux deux modes de réalisation qui viennent d'être décrits (détail D de la figure 4A) est illustrée par la figure 4B. Cette structure peut être obtenue par le mode de croissance décrit dans la méthode de Stranski-Krastanow. Cette méthode consiste à :
- épitaxier une couche dite de mouillage C1, par exemple en arséniure d'indium (InAs), qui présente une légère désaccord de maille (7%) par rapport à une couche initiale S, par exemple un substrat en arséniure de gallium (GaAs), jusqu'à ce que se forment des îlots ou boîtes quantiques (épaisseur critique : 1,5 à 1,7 monocouche);
- faire croître une couche C2 de même composition que la couche initiale S (GaAs) pour enterrer les boîtes quantiques ;
- faire croître à nouveau sur cette nouvelle couche C2 en GaAs le matériau InAs présentant le désaccord de maille avec cette dernière jusqu'à ce que cette couche ait une certaine épaisseur et qu'il se forme à nouveau des boîtes quantiques.

Ces étapes sont renouvelées autant de fois que nécessaire pour obtenir l'empilement correspondant au mode de réalisation de la figure 3 ou de la figure 4.

D'autres couples de matériaux peuvent aussi donner des boîtes quantiques avec la méthode de croissance de Stranski-Krastanov : InGaAs/GaAs, InAs/InP, Ge/Si, PbSe/PbEuTe, GaN/AlN, etc.

Un contrôle des conditions opératoires (température, pression gaz) sous lesquelles est effectuée l'épitaxie permet de fixer les tailles de boîte désirées ainsi que les distances entre boîtes. Bien entendu, il conviendra de choisir des conditions telles que ces distances entre boîtes soient suffisamment grandes pour éviter toute interaction entre boîtes voisines.

On peut en particulier faire varier la température durant chaque cycle de croissance.

Dans le cas où chacune des couches correspond à un ensemble donné de boîtes quantiques (mode de réalisation de la figure 3), on exécute des cycles de croissance permettant chacun la formation de toutes les couches successives de la structure a. Pour cela, les conditions seront modifiées de façon contrôlée d'une couche à l'autre. Ce mode de réalisation a l'avantage de permettre un contrôle précis des longueurs d'onde d'absorption.

Dans le cas où chacune des couches est constituée de boîtes quantiques de tous les ensembles (mode de réalisation de la figure 4A), chaque cycle de croissance correspond à la formation de cette couche. Avec ce mode de réalisation, le contrôle des longueurs d'onde d'absorption est moins précis, mais en contrepartie les raies d'absorption sont plus rapprochées, ce qui confère au composant une meilleure tolérance aux dérives ou fluctuations de longueurs d'onde du signal à régénérer.

Dans les conditions de croissance, par exemple à T=532°C, sous une pression équivalente du flux de As₄ de 7×10⁻⁶ torr avec une vitesse de dépôt moyenne de 0,01 monocouche par seconde, avec une couverture en InAs de l'ordre de 1,9 « monocouche » (c'est à dire pratiquement deux couches d'épitaxie) en utilisant un masque de Ta balayant continûment au cours de la croissance (cf référence [**2**]), on obtient un diamètre de boîtes quantiques d'environ 20 nm. La longueur d'onde du premier pic d'absorption est de 1,13 µm avec une largeur de bande à -3 dB de 30 nm.

La densité des boîtes quantiques est dans ce cas estimée à 5 10⁹ cm⁻², ce qui procure une puissance de saturation de +50 dBm, le temps de réponse impulsionnel du composant est estimé à 10 ps.

En modifiant les conditions par exemple en utilisant une couverture de InAs de 1,6 « monocouche », la taille des boîtes peut atteindre 30 nm, on réalise des boîtes quantiques de dimensions plus élevées que ce qui vient d'être décrit et avec une plus grande largeur de la distribution Gaussienne du spectre d'absorption. la taille de ces boîtes permet d'atteindre un pic d'absorption à 1,55 µm avec une largeur de bande à - 3 dB de 100 nm.

Lorsque la densité des boîtes quantiques est de 5 10⁹ cm⁻², la puissance de saturation peut être aussi faible que +6 dBm avec un temps de réponse du composant de 10 ps et de +15 dBm avec un temps de réponse de 1 ps.

Afin d'obtenir un absorbant saturable rapide, ce qui permet une utilisation dans des applications de transmission à haut débit, on prendra soin d'utiliser une méthode connue de l'état de la technique pour la fabrication de l'absorbant à savoir par exemple :
procéder à une irradiation ionique de la couche absorbante ; ou faire croître une couche à basse température entre le matériau d'enterrement (par exemple GaAs) et la nouvelle couche de mouillage (InAs); ou introduire des dopants dans la structure absorbante, ou introduire des dislocations contrôlées, ou encore appliquer un champ électrique extérieur, qui permet d'évacuer les porteurs photogénérés. Dans ce dernier cas, il conviendra de prévoir des électrodes recouvrant les faces externes de la structure ou des miroirs, ces électrodes étant munies de fenêtres permettant l'injection du signal à régénérer et l'extraction du signal régénéré.

On peut trouver une description détaillée de ces méthodes par exemple dans les références suivantes :
[1] : Demande de brevet français 98 12 430, Fabrice Devaux, Alexandre Shen et al., publiée le 7 avril 2000 sous le n° 2 784 202, intitulée « Dispositif de régénération d'un signal multiplexé en longueur d'onde comprenant un absorbant saturable » (Saturable absorber-based regeneration device for a WDM signal);
[2] : D. Leonard, K. Pond and P. M. Petroof, « Critical layer thickness for self-assembled InAs islands on GaAs », Pysical Review B, vol 50, n° 16, 15 Oct 1994, pp.11 687-11 692.

## Revendications

1. Absorbant optique saturable, **caractérisé en ce qu'**il comporte un matériau à absorption inhomogène (10) comprenant une pluralité d'ensembles [B₁(λ₁)-Bₚ(λₚ)] de boîtes quantiques (B₁-Bₚ), lesdits ensembles [B₁(λ₁)-Bₚ(λₚ)] étant associés respectivement à des valeurs de longueur d'onde d'absorption (λ₁, λₚ) différentes, les boîtes quantiques d'un ensemble [B₁(λ₁), Bₚ(λₚ)] donné étant dimensionnées de manière à présenter la valeur de longueur d'onde d'absorption (λ₁, λₚ) associée à cet ensemble, **en ce que** lesdites boîtes quantiques (B₁-Bₚ) sont disposées selon une pluralité de couches (n₁-nₚ, n₁-nₙ) superposées, et **en ce que** ledit absorbant est conçu pour permettre à une onde optique incidente de traverser lesdites couches superposées.

2. Absorbant optique saturable selon la revendication 1, **caractérisé en ce que** chacune desdites couches (n₁-nₚ) comporte des boîtes quantiques (B₁-Bₚ) d'un même ensemble, **en ce que** des couches appartenant à des ensembles différents sont superposées et forment une structure d'absorption élémentaire (a), et **en ce que** ledit absorbant comporte un empilement (A) de plusieurs structures d'absorption élémentaires (a).

3. Absorbant optique saturable selon la revendication 1, **caractérisé en ce que** ledit absorbant comporte un empilement (A) de plusieurs couches (n₁-nₙ), chacune de ces couches comportant des boîtes quantiques (B₁-Bₚ) de plusieurs ensembles.

4. Absorbant optique saturable selon l'une quelconque des revendications 2 ou 3, **caractérisé en ce qu'**il comporte deux miroirs (M1, M2) disposés de part et d'autre de l'empilement (A) et parallèlement à cet empilement ou légèrement inclinés par rapport à l'empilement.

5. Absorbant optique saturable selon la revendication 4, **caractérisé en ce que** le nombre total de couches à boîtes quantiques constituant ledit empilement (A) est sensiblement supérieur à 80 si lesdits miroirs (M1, M2) ont un taux de réflectivité sensiblement inférieur à 70%, et **en ce que** ledit nombre total de couches est sensiblement inférieur à 80 si ledit taux de réflectivité est sensiblement supérieur à 70%.

6. Absorbant optique saturable selon la revendication 4, **caractérisé en ce que** lesdits miroirs (M1, M2) ont un taux de réflectivité sensiblement égal à 70% , et **en ce que** le nombre total de couches à boîtes quantiques constituant ledit empilement (A) est sensiblement égal à 80.

7. Absorbant optique saturable selon l'une des revendications 2 à 6, **caractérisé en ce que** le matériau absorbant saturable est constitué d'une couche de mouillage (C1) en matériau binaire (InAs), puis d'une couche à boîtes quantiques (C2), cette alternance de couches de mouillage et de couches contenant les boîtes quantiques se répétant, l'ensemble étant déposé sur un substrat (S).

8. Application de l'absorbant saturable selon l'une quelconque des revendications 1 à 7, pour la régénération d'un signal (SE_{MUX}) multiplexé en longueur d'onde, les valeurs de longueur d'onde associées aux ensembles étant respectivement des valeurs de longueur d'onde de porteuses optiques du signal multiplexé.
